# FASCICULE DE BREVET EUROPEEN

(11) **EP 1 440 851 B1**
(45) Date de publication et mention de la délivrance du brevet: **05.12.2007**
(21) Numéro de dépôt: 04360005.5
(22) Date de dépôt: 21.01.2004
(51) Int. Cl.: B60R 13/02, F16B 5/07, F16B 5/12, B60R 13/04

(54) **Tête de clip intégré de fixation, à effet d'auto-centrage, notamment pour baguettes de caisse et autres accessoires d'automobiles**
Integrierter Montageklammerkopf, mit automatischem Zentrierungseffekt, insbesondere für Karosserizierleisten und andere Autozubehöre
Integrated mounting clip head, with automatic cetering effect, particularly for covering strips and other car accessories

(30) Priorité: 22.01.2003 FR 0300659
(43) Date de publication de la demande: 28.07.2004
(73) Titulaire: REHAU S.A., 57340 Morhange (FR)
(72) Inventeur: Igle, Armand, 57470 Hombourg-Haut (FR)
(74) Mandataire: Metz, Paul

(56) Documents cités:
- EP-A- 1 050 436
- DE-C- 19 721 757
- FR-A- 2 742 711
- FR-A- 2 784 613

## Description

La présente invention concerne une tête de clip intégré de fixation, à effet d'auto-centrage, destinée principalement aux baguettes, moulures, enjoliveurs de ceinture de caisse ou de bas de caisse ou à tout autre élément à rapporter sur la carrosserie ou autre partie d'un véhicule routier notamment du type automobile.

L'invention se rapporte également à un clip intégré et à une baguette de protection ou d'enjolivement pour carrosserie de véhicules routiers notamment du type automobile, comportant une telle tête de clip à effet d'auto-centrage.

Les baguettes de protection ou d'enjolivement de ce type sont des pièces en matière plastique réalisées par moulage par injection.

De façon classique, elles comportent sur leur face interne un espace creux longitudinal, continu et ouvert en direction de la carrosserie du véhicule, dans lequel sont logés plusieurs éléments de fixation destinés à coopérer avec des ouvertures correspondantes en regard de la carrosserie du véhicule.

Dans l'art antérieur, on connaît des éléments de fixation constitués de plusieurs parties fabriquées séparément, devant être assemblées préalablement ou lors du montage de la baguette sur la carrosserie. De tels éléments de fixation ont par exemple été décrits dans les demandes antérieures au nom du déposant FR 2.726.519 et FR 2.748.300.

Ces dispositifs nécessitent une étape de moulage pour chacune de leurs parties, suivie d'une étape d'assemblage des différents éléments sur la baguette. On connaît également le clip rapporté décrit dans le brevet allemand DE 19721757 au nom de la société DAIMLER-BENZ. Ce clip comprend une tête de clip en acier, découpée et emboutie de manière à former sur chacun de ses côtés un bras élastique en forme d'arc à courbure dirigée vers le bas. La tête de clip est ensuite visée sur une vis d'axe fixée à la face arrière de la baguette et servant d'âme au clip. La fabrication de la baguette est ainsi compliquée et rallongée.

Pour remédier à ces inconvénients, on a alors développé des éléments de fixation, appelés clips intégrés de fixation, formés d'une seule pièce et réalisés d'un seul tenant avec la baguette au cours d'une unique étape de moulage. A leur extrémité libre, ces éléments de fixation sont conçus comme des dispositifs d'enclenchement destinés à se mettre en prise dans une ouverture de la carrosserie qui leur est associée.

Le brevet REHAU FR 2.742.711 divulgue ainsi une baguette décorative qui comporte sur sa face arrière des éléments de fixation intégrés à la baguette, répartis selon un espacement préalablement déterminé. Ces éléments de fixation comportent une partie médiane centrale faisant saillie de leur base. Un élément de maintien en forme de plateau s'étend vers l'extérieur depuis l'extrémité libre de cette partie médiane centrale. Du centre de ce plateau, s'élève un élément dit boulon à extrémité libre constituant une tête d'encliquetage en forme de champignon.

De manière connue, la carrosserie présente une série d'ouvertures en forme de trou de serrure situées en vis à vis des éléments de fixation de la baguette.

Au cours du montage, on plaque la baguette contre la carrosserie en faisant passer la tête d'encliquetage des clips de fixation à travers la zone large des ouvertures. Puis, on effectue un déplacement axial de la baguette, de manière que l'axe des éléments boulon des clips de fixation pénètrent dans la zone étroite des ouvertures.

Simultanément, la face inférieure des têtes d'encliquetage vient en prise sous les bords de la carrosserie entourant la zone étroite des ouvertures, assurant ainsi une solidarisation par encliquetage de la baguette à la carrosserie.

Malgré l'apparente simplicité de cette méthode de montage, des problèmes sont souvent rencontrés avec ce type de clips intégrés devant coopérer avec des ouvertures de carrosserie en forme de trou de serrure.

En effet, l'insertion des têtes d'encliquetage dans la partie large des ouvertures de carrosserie puis la translation des clips dans la zone étroite de celles-ci s'effectuent en aveugle, la baguette opaque masquant la zone de montage. La difficulté est encore accrue du fait des cadences de montage extrêmement rapides à respecter.

Pour faciliter la première étape de montage consistant à faire passer la tête d'encliquetage à travers la zone large de l'ouverture, celle-ci doit être de dimensions bien supérieures à celles de la tête d'encliquetage du clip. Le positionnement de l'axe du clip est donc relativement approximatif.

De plus, le poids de la baguette a tendance à entraîner celle-ci vers le bas, provoquant alors un décalage vers le bas de l'axe des clips de fixation.

Or, pour réaliser sans difficulté l'étape suivante du montage consistant en un déplacement axial de la baguette en direction de l'avant du véhicule, l'axe de chacun des clips doit être situé précisément en face de la partie rétrécie de l'ouverture. En cas de mauvais positionnement, l'axe du clip vient buter contre la paroi transversale de l'ouverture et empêche le déplacement.

De ce fait, un positionnement précis de la baguette est nécessaire. Le monteur, travaillant en aveugle, est souvent contraint de faire plusieurs tentatives avant de réussir à faire coulisser la baguette, ce qui est incompatible avec les cadences de montage extrêmement rapides recherchées.

En outre, la difficulté est amplifiée lorsque la baguette présente une grande longueur, par exemple dans le cas de véhicules à trois portes, et/ou lorsque le nombre de clips à positionner est important.

Ces difficultés sont la cause de nombreux problèmes ou défauts de fixation de la baguette, ainsi que d'une augmentation non négligeable de la complexité, de la durée et du coût de sa pose.

Le but de l'invention est de fournir un nouveau type de tête de clip intégré de fixation, qui grâce à un effet d'auto-centrage, permet d'assurer un juste positionnement de l'axe du clip et permet ainsi d'éviter les inconvénients précédemment cités.

La conformation particulièrement avantageuse et inventive de la tête de clip selon l'invention provoque un centrage automatique du clip lors de l'étape d'insertion dans la partie large de l'ouverture en trou de serrure de la carrosserie. Le clip étant idéalement pré-positionné, l'étape de translation ne présente plus aucune difficulté. Pour plus de facilité, le mouvement du clip est en outre avantageusement guidé.

Le montage de la baguette est ainsi grandement simplifié, ce qui améliore considérablement la fiabilité de la pose et diminue son coût en limitant les retouches et les rebuts.

Pour résoudre ce problème technique la tête de clip selon l'invention comporte deux ailes latérales se poursuivant à l'avant par un nez allongé, ce qui lui donne une forme générale dite en delta et par exemple en « avion supersonique ».

La largeur de la tête de clip au niveau de ses ailes latérales est inférieure à celle de l'ouverture dans sa partie large, mais supérieure à celle-ci dans sa partie étroite.

Le nez de la tête de clip selon l'invention est suffisamment étroit pour pouvoir traverser la zone étroite de l'ouverture en trou de serrure. Il est en outre d'une longueur suffisante pour que son extrémité se trouve déjà engagée dans la zone étroite de l'ouverture dès l'insertion de la tête de clip à travers la partie large de l'ouverture lors de la première étape du montage de la baguette.

Il effectue ainsi un centrage automatique du clip de fixation en assurant dés le début un positionnement correct de celui-ci, puis en réalisant un véritable guidage de la tête de clip au cours de l'opération de translation qui correspond à la deuxième étape de montage de la baguette.

De façon préférentielle, la face inférieure d'au moins une des ailes latérales et/ou du nez allongé est conçue de manière à réaliser une rampe progressive d'épaisseur croissante de l'avant vers l'arrière.

En outre, grâce à sa forme particulièrement avantageuse et inventive, la tête de clip selon l'invention comporte sur sa face inférieure trois zones d'appui destinées à porter en appui sur la carrosserie lorsque la baguette est en position montée, au lieu d'une seule ou de deux zones d'appui dans les clips antérieurs. Le maintien de la baguette sur la carrosserie s'en trouve grandement amélioré.

D'autres caractéristiques et avantages de l'invention apparaîtront à la lecture de la description détaillée qui va suivre, description faite en référence aux dessins annexés, dans lesquels :
- la figure 1 est une vue d'ensemble en perspective de la face intérieure d'un tronçon de baguette comportant plusieurs clips intégrés à tête de clip selon l'invention;
- la figure 2 est une vue en perspective d'un clip intégré à tête de clip selon l'invention vu de l'avant ;
- la figure 3 est une vue en perspective d'un clip intégré à tête de clip selon l'invention vu de l'arrière ;
- la figure 4 est une vue en perspective d'un clip intégré à tête de clip selon l'invention vu de côté ;
- la figure 5 est une vue en coupe longitudinale centrale d'une tête de clip selon une variante préférentielle de l'invention ;
- les figures 6 à 8 sont des vues en coupe transversale, respectivement selon les lignes de coupe VI-VI, VII-VII et VIII-VIII de la figure 5, du nez de la tête de clip de la figure 5 ;
- la figure 9 est une vue de dessus schématique d'un clip selon l'invention monté sur la carrosserie dans la position initiale du montage de la baguette sur la carrosserie ;
- la figure 10 est une vue schématique en coupe longitudinale, selon la ligne de coupe X-X de la figure 9, d'un clip selon l'invention monté sur la carrosserie dans la position initiale de montage représentée sur la figure 9 ;
- la figure 11 est une vue de dessus schématique du clip selon l'invention monté sur la carrosserie dans la position de blocage finale du montage de la baguette sur la carrosserie ;
- la figure 12 est une vue schématique en coupe longitudinale, selon la ligne de coupe XII-XII de la figure 11, d'un clip selon l'invention monté sur la carrosserie dans la position de blocage finale représentée sur la figure 11.

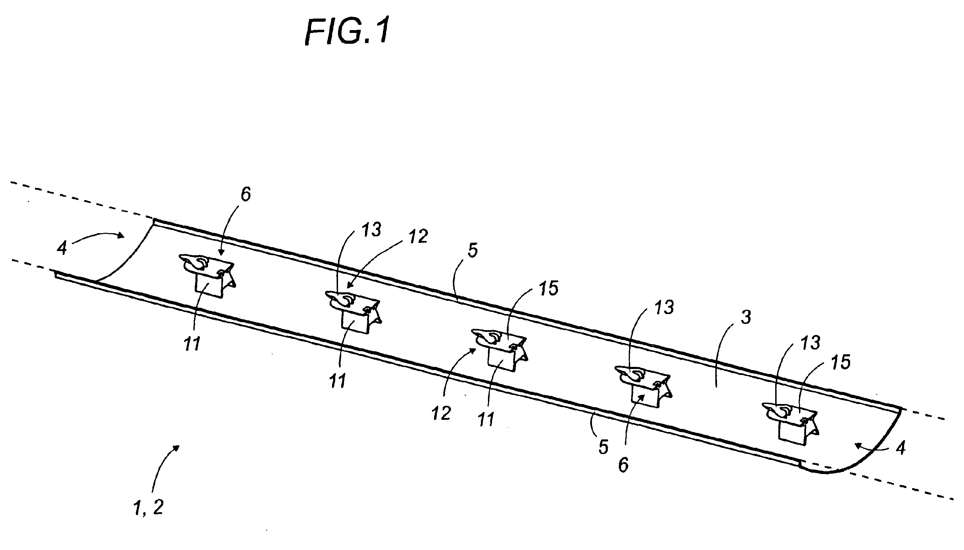

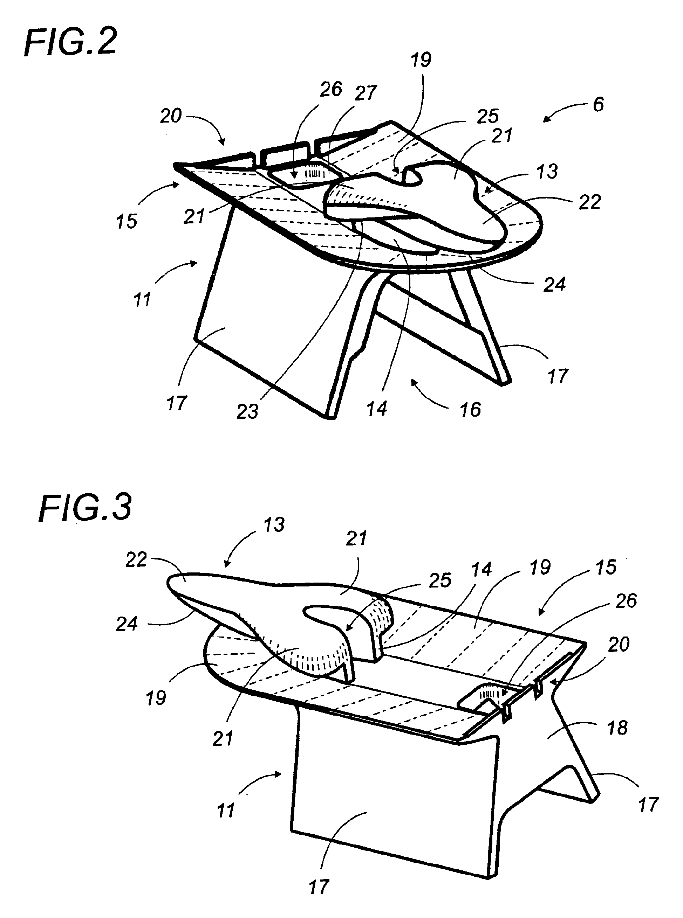

Le dispositif de fixation selon la présente invention va maintenant être décrit de façon détaillée en référence aux figures 1 à 12. Les éléments équivalents représentés sur les différentes figures porteront les mêmes références numériques.

Sur ces différentes figures, on a représenté une tête de clip, un clip de fixation et une baguette constituant des modes de réalisation préférentiels de l'invention. Il doit cependant être bien compris que ces figures ainsi que la description détaillée de celles-ci ne sont en rien limitatives de la portée et de l'application de l'invention, cette dernière pouvant s'étendre à tout le véhicule.

Par convention dans cette description, on désignera par faces avant et arrière de la tête de clip les faces de celle-ci dirigées respectivement vers la partie étroite et vers la partie large de l'ouverture en forme de trou de serrure, lorsque le clip est monté sur la carrosserie. Les notions de haut et de bas seront définies en fonction de l'orientation du dispositif tel que représenté sur les figures.

Sur la figure 1, on a représenté un accessoire destiné à être solidarisé à une paroi d'un véhicule routier, notamment ici un tronçon 1 d'une pièce allongée. Il s'agit par exemple d'un tronçon de baguette, bande, moulure décorative ou protectrice de ceinture de caisse, de bas de caisse ou analogue.

L'invention n'est cependant pas limitée à cette application préférentielle et pourrait être appliquées à tout autre pièce, élément ou accessoire approprié d'un véhicule routier, notamment automobile. A titre d'exemple, on peut citer les protections inférieures de portières, les badges, logos ou emblèmes, les pièces d'habillage intérieur, ou même les éléments de tableau de bord.

Selon sa nature, l'accessoire peut être rapporté sur et solidarisé à la face extérieure ou intérieure de la carrosserie ou de toute autre paroi du véhicule. Par carrosserie, on entend la structure périphérique du véhicule dans son ensemble.

Ce tronçon 1 de baguette 2 se présente sous la forme d'une pièce allongée, dont le corps présente une section transversale bombée de manière à définir sur sa face intérieure 3 un espace creux 4 longitudinal, continu et ouvert, destiné à être placé en direction de la carrosserie du véhicule.

De manière classique, l'espace creux 4 est bordé latéralement de deux rebords longitudinaux 5 sensiblement verticaux ou obliques selon les exigences de style.

La baguette 2 comporte sur sa face intérieure 3 des clips de fixation 6 dits intégrés, c'est-à-dire réalisés d'une seule pièce et d'un seul tenant avec la baguette au cours d'une unique étape de moulage.

Ces clips de fixation 6 sont destinés au montage et à la fixation de la baguette 2 sur la carrosserie du véhicule. Ils sont conçus pour coopérer dans ce but avec une série d'ouvertures 7 prévues dans la tôle 8 de la carrosserie notamment au niveau des portes ou des bas de caisse.

De façon connue, la forme des ouvertures 7 de la carrosserie est du type en « trou de serrure ». Elles présentent ainsi une zone large 9 suivie d'une zone plus étroite 10.

Les clips de fixation 6 existent en plusieurs endroits sur toute la longueur du corps de la baguette 2 de manière à garantir un maintien uniforme et solide de la pièce moulée contre la tôle 8 de carrosserie. Ils sont disposés selon un espacement prédéterminé correspondant à celui des ouvertures 7 avec lesquelles ils se retrouvent en vis à vis lorsque la baguette est positionnée contre la carrosserie.

Sur la figure 1, on a représenté les clips de fixation 6 positionnés de manière équidistante le long de la ligne médiane de la baguette. Néanmoins, suivant les modèles de baguette et les possibilités d'ouvertures dans la carrosserie, ces clips peuvent être disposés différemment. Ainsi par exemple, ils peuvent être alignés ou non, placés sur une ou plusieurs rangées s'étendant le long de la ligne médiane ou décalée(s), avec un espacement quelconque entre les clips. Les différents clips de fixation 6, en nombre quelconque, peuvent également se trouver dans des plans différents.

Chaque clip de fixation 6 comporte une base 11 de la face supérieure de laquelle fait saillie une structure d'accrochage ou de clipsage 12 conçue pour s'engager dans l'ouverture correspondante 7 de carrosserie.

Cette structure d'accrochage 12 comporte une tête de clip 13 réunie à la base 11 par une âme centrale 14 qui sert ainsi d'axe au clip de fixation.

De façon préférentielle, le clip de fixation 6 peut comporter en outre une sellette d'étanchéité 15 destinée à obturer l'ouverture 7 de carrosserie lorsque la baguette est en place, afin de limiter l'entrée d'eau et de saletés à l'intérieur de la carrosserie et d'atténuer la transmission du bruit de roulage.

Comme décrit et protégé par ailleurs dans une autre demande parallèle, la base 11 est de préférence une structure en caisson, à base rectangulaire, qui délimite un espace creux 16 ouvert à l'avant pour permettre le démoulage.

La base 11 est reliée à la face intérieure de la baguette par deux parois latérales 17 qui s'élèvent de manière inclinée et convergente assurant ainsi une parfaite stabilité au dièdre ainsi formé. Pour améliorer sa rigidité, la base 11 peut être également fermée à l'arrière par une paroi 18 qui, de préférence, ne se poursuit pas jusqu'à la face 3 de la baguette.

La base 11 constitue un pont de matière de hauteur suffisante pour maintenir la structure d'accrochage 12 à distance de la face intérieure 3 de la baguette d'une valeur rattrapant la flèche de concavité de la baguette 2 en vue de permettre l'accrochage sur la tôle de la carrosserie.

La paroi supérieure de la base 11 peut par exemple être réalisée, en forme de plateau arrondi à l'avant, de manière à constituer la sellette d'étanchéité 15 du clip de fixation.

Le bord périphérique 19 de la sellette d'étanchéité 15 est relevé de façon inclinée vers le haut, à l'avant et sur les côtés dans ce mode de réalisation, en direction de la carrosserie.

Selon une originalité brevetée par ailleurs, la sellette d'étanchéité 15 comporte un rebord fendu 20, sensiblement vertical et perpendiculaire au plan de la sellette, qui s'élève en direction de la carrosserie.

Dans le mode de réalisation représenté, le rebord fendu 20 ferme le bord arrière de la sellette d'étanchéité 15 et s'étend dans le prolongement de la paroi arrière 17 de la base 11.

De ce fait, lorsque le clip de fixation 6 est en prise avec l'ouverture de la carrosserie 7 correspondante, la sellette d'étanchéité constitue une surface de glissement et de contact qui vient par son bord incliné 19 et son rebord arrière 20 en contact avec le bord marginal de carrosserie 8 entourant l'ouverture 7. Une protection quasi-étanche de l'ouverture 7 est ainsi réalisée, s'opposant à l'entrée d'eau, de poussières et de saletés à l'intérieur de la carrosserie.

Cependant, afin de ne pas accroître l'effort de montage de la baguette par le frottement des sellettes d'étanchéité, il peut également être prévu que le bord périphérique incliné 19 et le rebord 20 de la sellette d'étanchéité 15 ne soient pas en contact avec la carrosserie, mais soient simplement dirigés vers celle-ci lorsque la baguette est montée en position finale. Une étanchéité totale n'est alors plus garantie. Toutefois, les entrées d'eau et de poussières sont fortement réduites par la présence de la sellette d'étanchéité 15 et par les rebords 5 de la baguette en appui contre la carrosserie.

Selon une caractéristique essentielle de l'invention, la tête de clip 13 présente une conformation particulièrement avantageuse et inventive qui lui permet de réaliser l'effet d'auto-centrage recherché.

La tête de clip 13 présente en effet une forme générale en delta pouvant être qualifiée selon la variante représentée de forme en « avion supersonique ». Elle comporte ainsi deux ailes latérales 21 se poursuivant à l'avant par un nez allongé 22 profilé.

La face inférieure des ailes latérales 21, tout comme celle du nez allongé 22, est conçue de manière à réaliser une rampe progressive, respectivement 23 pour les ailes latérales et 24 pour le nez allongé. Ainsi, l'épaisseur de la tête de clip augmente progressivement de l'avant vers l'arrière au niveau du nez allongé 22 et des ailes latérales 21.

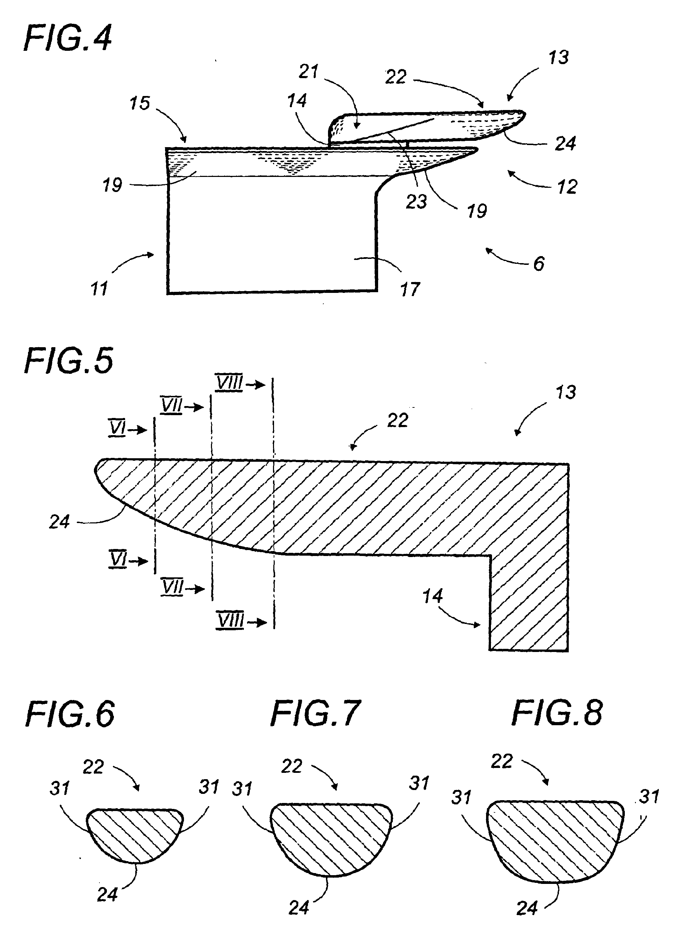

Selon une variante préférentielle représentée sur les figures 5 à 8, les ou l'une des faces latérales du nez 22 de la tête de clip 13 peuvent (peut) également comporter une rampe latérale progressive 31.

Les rampes progressives précédentes 23, 24 et 31 peuvent être formées d'un plan incliné ou d'un arrondi.

La tête de clip 13 comporte un évidement 25, situé de préférence sur sa face arrière et pouvant se prolonger le long de l'âme centrale 14. Cet évidement permet un refroidissement plus rapide de la tête de clip 13 et évite que des déformations de la tête de clip, qui constitue une importante masse chaude, ne se produisent lors de cette phase de refroidissement. Une précision suffisante peut ainsi être obtenue à l'injection.

De manière optionnelle, le clip de fixation 12 peut comporter au niveau de sa sellette d'étanchéité 15 une cavité 26.

Lors des opérations de moulage et de démoulage, cette cavité est occupée par l'extrémité d'une tige de maintien qui sert à maintenir la baguette 2 pendant le démoulage et notamment lors de l'extraction des cales moulantes hors des poches de moulage.

De préférence, la cavité 26 présente une ouverture 27 dirigée vers le haut, par exemple de forme sensiblement carrée. Elle peut également comporter une paroi de fond inclinée 28.

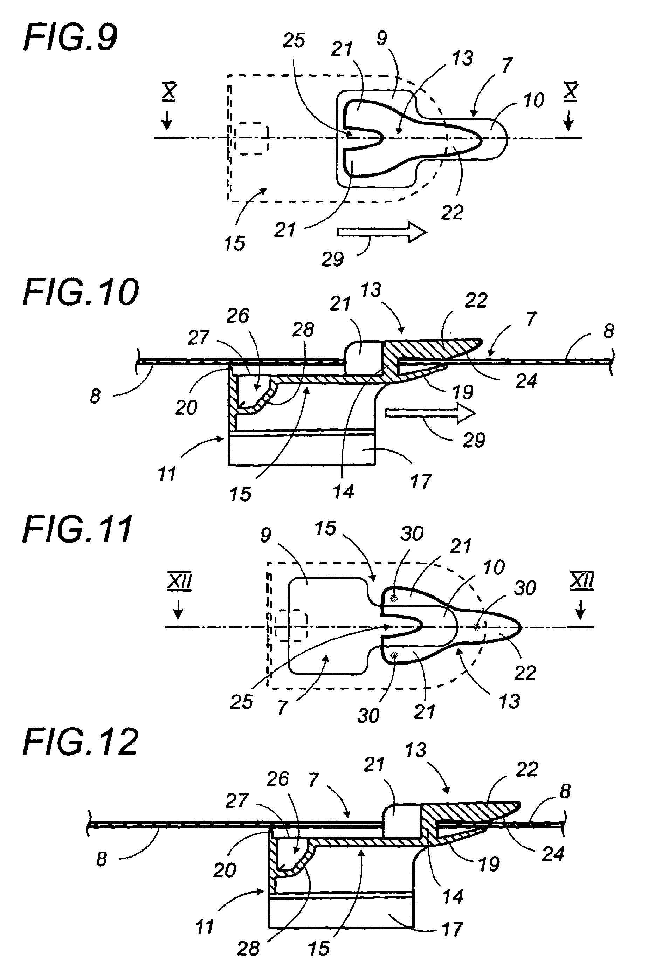

Le principe de la fonction d'auto-centrage réalisée par la tête de clip selon l'invention apparaît clairement sur les figures 9 à 12.

Lors de la première étape du montage de la baguette, illustrée par les figures 9 et 10, la tête de clip 13 est insérée dans et traverse la zone large 9 de l'ouverture en forme de trou de serrure 7 correspondante de la carrosserie 8.

Grâce à sa forme allongée et profilée, le nez 22 de la tête de clip 13 est suffisamment étroit pour pouvoir traverser la zone étroite 10 de l'ouverture en trou de serrure. Il est d'une longueur suffisante pour que son extrémité s'engage dès le début dans cette zone étroite 10 de l'ouverture, c'est-à-dire dès la première étape du montage de la baguette.

Au cours de la deuxième étape de montage, le monteur déplace la baguette par un mouvement de translation dans le sens des flèches 29 représentées sur les figures 9 et 10. Les clips de fixation 12 sont ainsi translatés vers la partie étroite 10 des trous de serrure 7 jusqu'à une position finale de blocage représentée sur les figures 11 et 12.

Pour permettre ce déplacement, l'âme centrale 14 du clip de fixation qui traverse l'ouverture, doit passer de la partie large 9 vers la partie étroite 10 de l'ouverture. Grâce à sa forme avantageuse et à son engagement initial dans la zone étroite, le nez 22 de la tête de clip 13 réalise un véritable guidage progressif de la tête de clip permettant de centrer automatiquement l'âme centrale 14 du clip et ainsi de faciliter le mouvement de translation.

Lors de ce mouvement de translation, la face inférieure de la tête de clip 13 vient progressivement, par glissement le long des rampes inclinées 23 et 24, en prise avec les bords de carrosserie 8 entourant la zone étroite de l'ouverture, ce qui assure le plaquage de la baguette 2 au niveau de ses rebords longitudinaux 5 contre la tôle.

La rampe inclinée 24 du nez 22 permet de faciliter l'engagement de la tête de clip derrière la carrosserie lors du glissement du clip vers l'avant au cours du montage.

Sur la 10, on a représenté un cas idéal où la tête de clip est déjà passée derrière la carrosserie. Dans ce cas, la rampe 24 a peu d'utilité. Cependant, la situation est souvent différente.

En effet, le monteur maintient habituellement la baguette 2 au milieu et au niveau de son extrémité arrière, sur laquelle il doit pousser pour réaliser le montage. Il arrive alors qu'à l'autre extrémité, la baguette ne soit pas complètement plaquée contre la carrosserie. Dans ce cas, la rampe 24 permet d'engager progressivement la tête de clip 13 derrière les bords de l'ouverture 7.

Les rampes latérales 31 permettent quant à elles d'assurer le montage lorsque le clip n'est pas parfaitement positionné dans l'axe du trou de serrure. En effet, il est assez difficile pour le monteur de présenter les clips de fixation parallèlement aux trous de serrure et dans l'axe de ceux-ci sur toute la longueur de la baguette. Les clips peuvent ainsi être moins bien centrés et par exemple décalés vers le bas par rapport à leur position sur la figure 9. Dans ce cas, au cours du mouvement de translation de la deuxième étape du montage, la rampe latérale 31 concernée va venir s'appuyer contre l'angle du trou de serrure situé entre la partie large 9 et la partie étroite 10 de l'ouverture 7 et va pousser la tête de clip 13 dans la partie étroite 10 de l'ouverture où la rampe 24 va ensuite assurer le passage de la tête derrière la carrosserie.

Les rampes inclinées 23 des ailes 21 servent à engager la tête de clip 13 derrière la carrosserie et à assurer le montage lorsque la baguette n'est pas plaquée assez fortement. Ces rampes 23 servent également à déterminer et à optimiser l'effort de montage, c'est-à-dire à le rendre progressif en fonction de la pente de ces rampes.

La forme en delta de la tête de clip 13, permet en outre de réaliser un maintien au niveau de trois zones d'appui 30 et non plus uniquement sur une ou deux zones comme les clips antérieurs, améliorant ainsi notablement la solidité de la fixation de la baguette sur la carrosserie.

Ces zones d'appui 30, d'étendue suffisante malgré l'évidement 25, sont situées sur la face inférieure de la tête de clip et permettent d'assurer le maintien de la baguette 2 en position montée par serrage de la carrosserie 8 au niveau de ces trois zones d'appui.

Ces zones d'appui 30, symbolisées sur la figure 11 par trois cercles à surface hachurée, sont localisées au niveau du nez 22 et de chacune des ailes 21 de la tête de clip où elles correspondent aux zones d'épaisseur maximale.

Il doit être bien compris que l'invention ne se limite pas aux têtes de clip, clips de fixation et baguettes tels que décrits ci-dessus et représentés sur les figures. Elle s'étend également à toutes les variantes imaginables par l'homme du métier comprises dans la portée des revendications.

Ainsi, on peut par exemple envisager de nombreuses applications, différentes de l'application préférentielle représentée et précédemment décrite, pour la tête de clip ou le clip de fixation selon l'invention.

La tête de clip et plus généralement le clip de fixation selon l'invention, ne sont évidemment pas limités aux baguettes de ceinture de caisse. Ils peuvent être utilisés pour tout autre élément destiné à être rapporté sur la carrosserie ou une autre paroi d'un véhicule routier.

On peut par exemple citer des accessoires de carrosserie extérieure, tels que des protections inférieures de portières, des badges, logos ou emblèmes décoratifs ou de signalisation, ou tout autre accessoire approprié. On peut également les utiliser pour réaliser la fixation d'accessoires de carrosserie intérieure, notamment de pièces d'habillage intérieur, ou même d'autres pièces ou accessoires intérieurs de véhicules comme par exemple des éléments de tableau de bord ou autres.

## Revendications

1. Ensemble comprenant une tête (13) de clip intégré (6) de fixation d'un élément à rapporter et une ouverture (7) dite en « trou de serrure » réalisée en regard dans un support, la tête de clip (13) et l'ouverture (7) étant conçues pour coopérer afin d'assurer la fixation de l'élément à rapporter sur le support, ledit clip (6) étant réalisé d'une seule pièce et d'un seul tenant avec l'élément à rapporter, à savoir une baguette (2) de protection ou d'enjolivement ou un autre élément à rapporter sur la carrosserie (8) ou une autre partie d'un véhicule routier notamment automobile, et l'ouverture (7) étant formée d'une partie large (9) prolongée par une partie étroite (10), **caractérisé en ce que** la tête de clip (13) présente un corps de forme générale en delta comportant deux ailes latérales (21) se poursuivant à l'avant par un nez allongé (22), **en ce que** la largeur de la tête de clip (13) au niveau de ses ailes latérales (21) est inférieure à celle de l'ouverture (7) dans sa partie large (9) mais supérieure à celle de l'ouverture (7) dans sa partie étroite (10), et **en ce que** le nez (22) de la tête de clip (13) est suffisamment étroit pour pouvoir traverser la partie étroite (10) de l'ouverture (7) et suffisamment long pour que son extrémité soit déjà engagée dans cette partie étroite (10) dès l'insertion de la tête de clip (13) à travers la partie large (9) de l'ouverture (7).

2. Ensemble selon la revendication précédente **caractérisée en ce que** la tête de clip (13) comporte sur sa face inférieure trois zones d'appui (30) destinées à porter sur le support lorsque l'élément à rapporter est en position montée.

3. Ensemble selon l'une quelconque des revendications précédentes **caractérisée en ce que** la face inférieure d'au moins une des ailes latérales (21) est conçue de manière à réaliser une rampe progressive (23) d'épaisseur croissante de l'avant vers l'arrière.

4. Ensemble selon l'une quelconque des revendications précédentes **caractérisée en ce que** la face inférieure du nez allongé (22) est conçue de manière à réaliser une rampe progressive (24) d'épaisseur croissante de l'avant vers l'arrière.

5. Ensemble selon l'une quelconque des revendications précédentes **caractérisée en ce qu'**au moins une des faces latérales du nez allongé (22) comporte une rampe latérale progressive (31).

6. Ensemble selon l'une quelconque des revendications précédentes **caractérisée en ce que** la tête de clip (13) comporte un évidement (25) permettant un refroidissement plus rapide.

7. Ensemble comprenant un clip intégré (6) de fixation d'un élément à rapporter et une ouverture (7) formée d'une partie large (9) prolongée par une partie étroite (10) et réalisée en regard dans un support, le clip (6) étant réalisé d'une seule pièce et d'un seul tenant avec l'élément à rapporter et comportant une tête de clip (13) conçue pour coopérer avec l'ouverture (7) afin d'assurer la fixation de l'élément à rapporter sur le support, **caractérisé en ce que** la tête de clip (13) et l'ouverture (7) forme un ensemble conforme à l'une quelconque des revendications précédentes.

8. Ensemble selon la revendication précédente **caractérisé en ce que** le clip intégré de fixation (6) comporte en outre une base (11) et une âme centrale (14) réunissant la tête de clip (13) à la base (11) et servant ainsi d'axe au clip de fixation.

9. Ensemble selon la revendication 7 ou 8 **caractérisé en ce que** le clip intégré de fixation (6) comporte en outre une sellette d'étanchéité (15).

10. Ensemble selon la revendication précédente **caractérisé en ce que** la sellette d'étanchéité (15) présente un bord périphérique (19) relevé de façon inclinée vers le haut en direction du support.

11. Ensemble selon la revendication 9 ou 10 **caractérisé en ce que** la sellette d'étanchéité (15) comporte un rebord fendu (20), sensiblement vertical et perpendiculaire au plan de la sellette, s'élevant en direction du support.

12. Ensemble selon l'une quelconque des revendications 9 à 11 **caractérisé en ce que** la sellette d'étanchéité (15) présente une cavité (26) occupée lors des opérations de moulage et de démoulage par l'extrémité d'une tige de maintien.

13. Ensemble selon la revendication précédente **caractérisé en ce que** la cavité (26) comporte une ouverture (27) dirigée vers le haut et une paroi de fond inclinée (28).

14. Ensemble comprenant une baguette (2) de protection ou d'enjolivement à rapporter sur la carrosserie (8) d'un véhicule routier notamment automobile et au moins une ouverture (7) formée d'une partie large (9) prolongée par une partie étroite (10), la baguette (2) comportant sur sa face arrière (3) au moins un clip intégré de fixation (6) réalisé d'une seule pièce et d'un seul tenant avec la baguette et qui comporte une tête de clip (13) conçue pour coopérer avec l'ouverture (7) réalisée en regard dans la carrosserie (8) afin d'assurer la fixation de la baguette sur la carrosserie, **caractérisé en ce que** la tête de clip (13) et l'ouverture (7) forme un ensemble conforme à l'une quelconque des revendications 1 à 6.

15. Ensemble comprenant une baguette (2) de protection ou d'enjolivement à rapporter sur la carrosserie (8) d'un véhicule routier notamment automobile et au moins une ouverture (7) formée d'une partie large (9) prolongée par une partie étroite (10), la baguette (2) comportant sur sa face arrière (3) au moins un clip intégré de fixation (6) réalisé d'une seule pièce et d'un seul tenant avec la baguette et qui comporte une tête de clip (13) conçue pour coopérer avec l'ouverture (7) réalisée en regard dans la carrosserie (8) afin d'assurer la fixation de la baguette sur la carrosserie, **caractérisé en ce que** le clip intégré de fixation (6) et l'ouverture (7) forme un ensemble conforme à l'une quelconque des revendications 7 à 13.

## Claims

1. Assembly comprising the head (13) of an integrated clip (6) for mounting an element to be added and an opening (7) called a « keyhole » made opposite on a support, the clip head (13) and the opening (7) being designed to cooperate in order to ensure the mounting of the element to be added on the support, said clip (6) being a single piece and forming one block with the element to be added, namely a rod (2) for protection or embellishment or another element to be added onto the bodywork (8) or another part of a road vehicle in particular a car, and the opening (7) consisting of a large part (9) extended by a narrow part (10), **characterised in that** the clip head (13) in general presents a delta-shaped body comprising two side wings (21) extending towards the front by means of a lengthened nose (22), **in that** the width of the clip head (13) level with its side wings (21) is smaller than that of the opening (7) on its large part (9) but larger than that of the opening (7) on its narrow part (10), and **in that** the nose (22) of the clip head (13) is sufficiently narrow to be able pass the narrow part (10) of the opening (7) and sufficiently long enough for its end already to be engaged in this narrow part (10) on insertion of the clip head (13) across the large part (9) of the opening (7).

2. Assembly according to the previous claim **characterised in that** the clip head (13) comprises three support areas (30) on its lower face that are intended to be arranged on the support when the element to be added is in the mounted position.

3. Assembly according to any of the previous claims **characterised in that** the lower face of at least one of the side wings (21) is designed in order to form a progressive incline (23) with an increasing thickness from front to back.

4. Assembly according to any of the previous claims **characterised in that** the lower face of the lengthened nose (22) is designed in order to form a progressive incline (24) with its thickness increasing from the front to back.

5. Assembly according to any of the previous claims **characterised in that** at least one of the lateral faces of the lengthened nose (22) includes a lateral progressive incline (31).

6. Assembly according to any of the previous claims **characterised in that** the clip head (13) comprises a hollow (25) allowing faster cooling.

7. Assembly comprising an integrated clip (6) for mounting an element to be added and an opening (7) made up of a large part (9) extended by a narrow part (10) and made opposite on a support, the clip (6) being a single piece and forming one block with the element to be added and including a clip head (13) designed to cooperate with the opening (7) in order to ensure the mounting of the element to be added on the support, **characterised in that** the clip head (13) and the opening (7) form an assembly according to any of the previous claims.

8. Assembly according to the previous claim **characterised in that** the integrated mounting clip (6) also includes a base (11) and a central core (14) that joins the clip head (13) to the base (11) thus serving as an axis for the mounting clip.

9. Assembly according to claim 7 or 8 **characterised in that** the integrated mounting clip (6) also includes a sealing mounting plate (15).

10. Assembly according to the previous claim **characterised in that** the sealing mounting plate (15) presents a peripheral edge (19) raised in an upward inclined way in the direction of the support.

11. Assembly according to claim 9 or 10 **characterised in that** the sealing mounting plate (15) includes a split ledge (20), slightly vertical and perpendicular to the surface of the mounting plate, rising in the direction of the support.

12. Assembly according to any of the claims 9 to 11 **characterised in that** the sealing mounting plate (15) presents a cavity (26) taken up during the moulding and removal operations by the end of a support shank.

13. Assembly according to the previous claim **characterised in that** the cavity (26) comprises an opening (27) directed upwards and an inclined base wall (28).

14. Assembly comprising a rod (2) for protection or embellishment to be added onto the bodywork (8) of a road vehicle, in particular a car, and at least one opening (7) made up of a large part (9) extended by a narrow part (10), the rod (2) including on its rear face (3) at least one integrated mounting clip (6) being a single piece and forming only one block with the rod and that includes a clip head (13) designed to cooperate with the opening (7) made opposite on the bodywork (8) in order to ensure the mounting of the rod on the bodywork, **characterised in that** the clip head (13) and the opening (7) form an assembly according to any of claims 1 to 6.

15. Assembly comprising a rod (2) for protection or embellishment to be added onto the bodywork (8) of a road vehicle, in particular a car, and at least one opening (7) made up of a large part (9) extended by a narrow part (10), the rod (2) including on its rear face (3) at least one integrated mounting clip (6) made in a single piece and forming one block with the rod and which includes a clip head (13) designed to cooperate with the opening (7) made opposite on the bodywork (8) in order to ensure the mounting of the rod on the bodywork, **characterised in that** the integrated mounting clip (6) and the opening (7) form an assembly according to any of claims 7 to 13.

## Patentansprüche

1. Anordnung, umfassend einen Kopf (13) einer integrierten Befestigungsklammer (6) für ein zu montierendes Element und eine als "Schlüsselloch" bezeichnete Öffnung (7), die gegenüber in einem Träger ausgebildet ist, wobei der Klammerkopf (13) und die Öffnung (7) dazu ausgelegt sind, miteinander zusammen zu wirken, um die Montage des am Träger zu montierenden Elementes sicherzustellen, wobei die Klammer (6) einstückig und zusammenhängend mit dem zu montierenden Element, nämlich einer Schutz- oder Zierleiste (2) oder einem anderen, an der Karosserie (8) oder an einem anderen Teil eines Straßenfahrzeugs, insbesondere eines Kraftfahrzeugs, zu montierenden Element, ausgebildet ist, und die Öffnung (7) durch einen breiten Teil (9), der durch einen schmalen Teil (10) verlängert ist, gebildet wird, **dadurch gekennzeichnet, dass** der Klammerkopf (13) einen allgemein deltaförmigen Körper mit zwei seitlichen Schenkeln (21), die sich über eine langgestreckte Nase (22) nach vorne fortsetzen, umfasst, dass die Breite des Klammerkopfes (13) auf Höhe seiner seitlichen Schenkel (21) kleiner als die der Öffnung (7) in seinem breiten Teil (9), aber größer als die der Öffnung (7) in seinem schmalen Teil (10) ist, und dass die Nase (22) des Klammerkopfes (13) schmal genug ist, um durch den schmalen Teil (10) der Öffnung (7) zu passen, und lang genug ist, damit ihr Ende bereits beim Einsetzen des Klammerkopfes (13) durch den breiten Teil (9) der Öffnung (7) mit diesem schmalen Teil (10) in Eingriff tritt.

2. Anordnung nach dem vorhergehenden Anspruch, **dadurch gekennzeichnet, dass** der Klammerkopf (13) an seiner Unterseite drei Auflagebereiche (30) umfasst, die dazu bestimmt sind, auf dem Träger aufzuliegen, wenn sich das zu montierende Element in der montierten Stellung befindet.

3. Anordnung nach einem der vorhergehenden Ansprüche, **dadurch gekennzeichnet, dass** die Unterseite wenigstens eines der seitlichen Schenkel (21) so gestaltet ist, dass sie eine progressive Rampe (23) mit von vorne nach hinten zunehmender Dicke bildet.

4. Anordnung nach einem der vorhergehenden Ansprüche, **dadurch gekennzeichnet, dass** die Unterseite der langgestreckten Nase (22) so gestaltet ist, dass sie eine progressive Rampe (24) mit von vorne nach hinten zunehmender Dicke bildet.

5. Anordnung nach einem der vorhergehenden Ansprüche, **dadurch gekennzeichnet, dass** mindestens eine der Seitenflächen der langgestreckten Nase (22) eine progressive seitliche Rampe (31) umfasst.

6. Anordnung nach einem der vorhergehenden Ansprüche, **dadurch gekennzeichnet, dass** der Klammerkopf (13) eine Ausnehmung (25) umfasst, die eine schnellere Abkühlung ermöglicht.

7. Anordnung, umfassend eine integrierte Befestigungsklammer (6) für ein zu montierendes Element und eine Öffnung (7), die aus einem breiten Teil (9) besteht, der durch einen schmalen Teil (10) verlängert ist, und die gegenüber in einem Träger ausgebildet ist, wobei die Klammer (6) einstückig und zusammenhängend mit dem zu montierenden Element ausgebildet ist und einen Klammerkopf (13) umfasst, der zum Zusammenwirken mit der Öffnung (7) ausgelegt ist, um die Befestigung des am Träger zu montierenden Elementes sicherzustellen, **dadurch gekennzeichnet, dass** der Klammerkopf (13) und die Öffnung (7) eine Anordnung gemäß einem der vorhergehenden Ansprüche bilden.

8. Anordnung nach dem vorhergehenden Anspruch, **dadurch gekennzeichnet, dass** die integrierte Befestigungsklammer (6) ferner eine Basis (11) und einen Mittelsteg (14), der den Klammerkopf (13) mit der Basis (11) verbindet und somit als Achse für die Befestigungsklammer dient, umfasst.

9. Anordnung nach Anspruch 7 oder 8, **dadurch gekennzeichnet, dass** die integrierte Befestigungsklammer (6) ferner eine schemelförmige Dichtungsschale (15) umfasst.

10. Anordnung nach dem vorhergehenden Anspruch, **dadurch gekennzeichnet, dass** die schemelförmige Dichtungsschale (15) einen Umfangsrand (19) umfasst, der so angehoben ist, dass er nach oben in Richtung des Trägers ansteigt.

11. Anordnung nach Anspruch 9 oder 10, **dadurch gekennzeichnet, dass** die schemelförmige Dichtungsschale (15) eine geschlitzte Randleiste (20) umfasst, die im wesentlichen vertikal und senkrecht zur Ebene des Sattels verläuft und in Richtung des Trägers ansteigt.

12. Anordnung nach einem der Ansprüche 9 bis 11, **dadurch gekennzeichnet, dass** die schemelförmige Dichtungsschale (15) einen Hohlraum (26) aufweist, der bei den Vorgängen des Formens und Entformens vom Ende eines Halteschaftes eingenommen wird.

13. Anordnung nach dem vorhergehenden Anspruch, **dadurch gekennzeichnet, dass** der Hohlraum (26) eine nach oben gerichtete Öffnung (27) und eine geneigte Bodenwand (28) umfasst.

14. Anordnung, umfassend eine Schutz- oder Zierleiste (2), die an der Karosserie (8) eines Straßenfahrzeugs, insbesondere eines Kraftfahrzeugs, zu montieren ist, und mindestens eine Öffnung (7), die durch einen breiten Teil (9) gebildet ist, welcher durch einen schmalen Teil (10) verlängert ist, wobei die Leiste (2) an ihrer Rückseite (3) mindestens eine integrierte Befestigungsklammer (6) umfasst, die einstückig und zusammenhängend mit der Leiste ausgebildet ist und einen Klammerkopf (13) umfasst, der dazu ausgelegt ist, mit der gegenüber in der Karosserie (8) ausgebildeten Öffnung (7) zusammenzuwirken, um die Montage der Leiste an der Karosserie sicherzustellen, **dadurch gekennzeichnet, dass** der Klammerkopf (13) und die Öffnung (7) eine Anordnung gemäß einem der Ansprüche 1 bis 6 bilden.

15. Anordnung, umfassend eine Schutz- oder Zierleiste (2), die an der Karosserie (8) eines Straßenfahrzeugs, insbesondere eines Kraftfahrzeugs, zu montieren ist, und mindestens eine Öffnung (7), die durch einen breiten Teil (9) gebildet ist, welcher durch einen schmalen Teil (10) verlängert ist, wobei die Leiste (2) an ihrer Rückseite (3) mindestens eine integrierte Befestigungsklammer (6) umfasst, die einstückig und zusammenhängend mit der Leiste ausgebildet ist und einen Klammerkopf (13) umfasst, der dazu ausgelegt ist, mit der gegenüber in der Karosserie (8) ausgebildeten Öffnung (7) zusammenzuwirken, um die Befestigung der Leiste an der Karosserie sicherzustellen, **dadurch gekennzeichnet, dass** die integrierte Befestigungsklammer (6) und die Öffnung (7) eine Anordnung gemäß einem der Ansprüche 7 bis 13 bilden.
